# EUROPEAN PATENT APPLICATION

(11) **EP 3 831 601 A1**
(43) Date of publication of application: **09.06.2021**
(21) Application number: 19844095.0
(22) Date of filing: 01.08.2019
(51) Int. Cl.: B32B 27/36, B32B 27/30, C08G 63/16

(54) **MULTILAYER BODY**

(30) Priority: 03.08.2018 JP 2018146976
(71) Applicant: Mitsubishi Chemical Corporation, Chiyoda-ku Tokyo 100-8251 (JP)
(72) Inventor: SATOU, Takashi, Tokyo 100-8251 (JP)
(74) Representative: Vossius & Partner Patentanwälte Rechtsanwälte mbB
(86) International application number: PCT/JP2019/030269
(87) International publication number: WO 2020/027276

(57) **Abstract**

A multilayer body including a polyester layer and a hard-coat layer, wherein a polyester contained in the polyester layer includes a structural unit derived from a diol and a structural unit derived from a dicarboxylic acid, and, of the structural unit derived from a dicarboxylic acid, a main structural unit is a structural unit derived from 2,5-furandicarboxylic acid. A film including the multilayer body.

## Description

### Technical Field

The present invention relates to a multilayer body including a polyester layer and a hard-coat layer. The present invention relates to a multilayer body that has high surface hardness, is less likely to undergo deformation such as curling, and has high processibility, high handleability, and high flexibility.

### Background Art

2,5-Furandicarboxylic acid can be produced from biomass-derived raw materials. For this reason, the polyester obtained from 2,5-furandicarboxylic acid as the raw material has been attracting attention as an environmentally benign material in these years. In addition, the polyester obtained from 2,5-furandicarboxylic acid as the raw material has high gas barrier performance, and hence is combined with an aluminum deposition layer to provide a multilayer body (for example, Patent Literatures 1 to 4).

Polyesters represented by polyethylene terephthalate (PET) and polybutylene terephthalate (PBT) have high processibility, and hence are processed into various shapes and used. However, polyesters have insufficient surface hardness in some applications requiring abrasion resistance or scratch resistance. In such a case, a multilayer body is provided so as to have a hard-coat layer on a surface of a polyester layer (for example, refer to Patent Literature 5).

PTL 1: JP2007-146153A
PTL 2: JP2008-291243A
PTL 3: JP2016-102173A
PTL 4: WO2017/115737A1
PTL 5: JP2001-109388A

When such a multilayer body having a hard-coat layer on a surface of a polyester layer is a low-rigidity member such as a film or a sheet, it may undergo deformation such as curling due to thermal shrinkage of the hard-coat layer or the difference in the thermal expansion coefficient between the polyester layer and the hard-coat layer. Thus, it may become difficult to process the multilayer body into a desired shape, or it may become difficult to handle the multilayer body. Even when the multilayer body has sufficient rigidity, bending of the multilayer body into a desired shape may cause defects such as cracking of the hard-coat layer.

### Summary of Invention

An object of the present invention is to provide a multilayer body that includes a polyester layer and a hard-coat layer, has high surface hardness, is less likely to undergo deformation such as curling, and has high processibility, high handleability, and high flexibility. Another object of the present invention is to provide a multilayer body suitable for a member required to have flexibility (plasticity) in, for example, various molding applications and flexible displays.

The inventor of the present invention has found that use of a specific polyester provides a multilayer body that is, even in the case of including a hard-coat layer, less likely to undergo deformation such as curling, has high processibility, high handleability, high flexibility, and high surface hardness.

Specifically, the present invention encompasses the following embodiments.
[1] A multilayer body including a hard-coat layer and a layer containing a polyester including a structural unit derived from a diol and a structural unit derived from a dicarboxylic acid, wherein the structural unit derived from a dicarboxylic acid contains, as a main structural unit, a structural unit derived from 2,5-furandicarboxylic acid.
[2] The multilayer body according to [1], wherein, in the polyester, the structural unit derived from a diol contains, as a main structural unit, a structural unit derived from 1,2-ethanediol.
[3] The multilayer body according to [1] or [2], including a decorative layer.
[4] A film including the multilayer body according to any one of [1] to [3].

More specifically, the present invention encompasses the following embodiments.

A first gist of the present invention is a multilayer body comprising a polyester layer and a hard-coat layer, wherein a polyester contained in the polyester layer includes a structural unit derived from a diol and a structural unit derived from a dicarboxylic acid, and, of the structural unit derived from a dicarboxylic acid, a main structural unit is a structural unit derived from 2,5-furandicarboxylic acid.

A second gist of the present invention is the multilayer body according to the first gist, wherein, of the structural unit derived from a diol, a main structural unit is a structural unit derived from 1,2-ethanediol.

A third gist of the present invention is the multilayer body according to the first or second gist, wherein the multilayer body has, on a hard-coat-layer side, a surface pencil hardness of 2H or higher.

A fourth gist of the present invention is the multilayer body according to any one of the first to third gists, wherein the hard-coat layer has a thickness of 30 µm or less.

A fifth gist of the present invention is the multilayer body according to any one of the first to fourth gists, wherein the hard-coat layer has a surface pencil hardness equal to or higher than a surface pencil hardness of the polyester layer.

A sixth gist of the present invention is the multilayer body according to any one of the first to fifth gists, wherein the hard-coat layer has an indentation modulus of elasticity of 10 to 10000 MPa.

A seventh gist of the present invention is the multilayer body according to any one of the first to sixth gists, wherein the polyester contained in the polyester layer has a flexural modulus of elasticity of 2500 to 4000 MPa.

An eighth gist of the present invention is the multilayer body according to any one of the first to seventh gists, wherein the polyester contained in the polyester layer has a reduced viscosity of 0.5 to 4 dL/g.

A ninth gist of the present invention is the multilayer body according to any one of the first to eighth gists, wherein the hard-coat layer contains an acrylic resin.

A tenth gist of the present invention is the multilayer body according to any one of the first to ninth gists, further comprising a decorative layer.

An eleventh gist of the present invention is a film comprising the multilayer body according to the first to tenth gists.

Incidentally, in the third embodiment, "multilayer body has, on a hard-coat-layer side, a surface pencil hardness" means that the multilayer body has the surface pencil hardness on "a side having the hard-coat layer". In the fifth embodiment, "the hard-coat layer has a surface pencil hardness" means that "the hard-coat layer" has the surface pencil hardness.

### Advantageous Effects of Invention

The present invention provides a multilayer body that includes a polyester layer and a hard-coat layer, has high surface hardness, is less likely to undergo deformation such as curling, and has high processibility, high handleability, and high flexibility.

A multilayer body according to the present invention is suitably applicable to applications involving various molding processes or members required to have flexibility (plasticity) in, for example, flexible displays. Description of Embodiments

Hereinafter, representative embodiments of the present invention will be described. However, the present invention within the spirit and scope thereof is not limited to the following embodiments.

A multilayer body according to the present invention includes a layer containing a polyester (hereafter, may be referred to as "polyester layer according to the present invention") and a hard-coat layer (hereafter, may be referred to as "hard-coat layer according to the present invention"). The polyester contained in the polyester layer according to the present invention (hereafter, may be referred to as "polyester according to the present invention") includes a structural unit derived from a diol and a structural unit derived from a dicarboxylic acid. In the polyester according to the present invention, the structural unit derived from a dicarboxylic acid includes, as a main structural unit, a structural unit derived from 2,5-furandicarboxylic acid.

Namely, the multilayer body of the present invention comprises a polyester layer and a hard-coat layer, wherein a polyester contained in the polyester layer includes a structural unit derived from a diol and a structural unit derived from a dicarboxylic acid, and, of the structural unit derived from a dicarboxylic acid, a main structural unit is a structural unit derived from 2,5-furandicarboxylic acid.

In the present invention, "structural unit derived from ..." means a structural unit derived from a raw-material monomer (monomer) and incorporated into the polymer (polyester). Hereafter, "structural unit derived from" may be simply referred to as "unit". For example, "structural unit derived from a diol" may be referred to as "diol unit", "structural unit derived from a dicarboxylic acid" may be referred to as "dicarboxylic acid unit", "structural unit derived from 2,5-furandicarboxylic acid" may be referred to as "2,5-furandicarboxylic acid unit", and "structural unit derived from 1,2-ethanediol" may be referred to as "1,2-ethanediol unit".

In the present invention, "main structural unit" means, of the "structural unit", a structural unit of the highest content. In the present invention, the main structural unit content of the structural unit is ordinarily 50 mol% or more, preferably 70 mol% or more, more preferably 80 mol% or more, still more preferably 90 mol% or more, most preferably 100 mol%. Thus, the polyester according to the present invention contains, relative to 100 mol% of all the dicarboxylic acid units constituting the polyester, the 2,5-furandicarboxylic acid unit in an amount of ordinarily 50 mol% or more, preferably 70 mol% or more, more preferably 80 mol% or more, still more preferably 90 mol% or more, most preferably 100 mol%.

### [Polyester according to the present invention]

### <Dicarboxylic acid unit>

The polyester according to the present invention includes, as a dicarboxylic acid unit, a 2,5-furandicarboxylic acid unit represented by the following structural formula (1) as a main structural unit. Thus, the polyester according to the present invention is produced from, as a main dicarboxylic acid raw material, 2,5-furandicarboxylic acid and/or its derivative. Examples of the derivative of 2,5-furandicarboxylic acid incorporated as the 2,5-furandicarboxylic acid unit include anhydride of 2,5-furandicarboxylic acid, C₁₋₄ lower alkyl ester of 2,5-furandicarboxylic acid, and chloride of 2,5-furandicarboxylic acid.

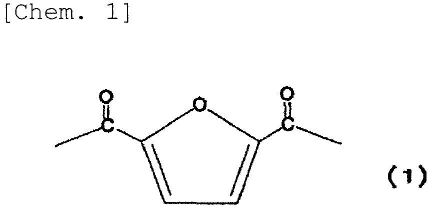

The polyester according to the present invention includes the 2,5-furandicarboxylic acid unit, to thereby provide increased surface hardness. The polyester according to the present invention provides such increased surface hardness, so that the polyester layer according to the present invention, which contains the polyester, has increased surface hardness. The multilayer body according to the present invention, which includes the polyester layer, can have increased surface hardness (on the hard-coat-layer side). Thus, the hard-coat layer, which is formed with a thickness for providing a desired surface hardness of the multilayer body, can be formed with a reduced thickness. In the multilayer body according to the present invention, the hard-coat layer according to the present invention can be formed with such a reduced thickness, so that the multilayer body becomes less likely to undergo deformation such as curling to provide high processibility and high handleability. In the multilayer body according to the present invention, the hard-coat layer according to the present invention can be formed with such a reduced thickness, to thereby provide high flexibility.

Such formation of a hard-coat layer on a surface of the polyester including the 2,5-furandicarboxylic acid unit and the resultant advantages described above are not known. Stated another way, these findings have been firstly found by the inventor of the present invention.

The reason why the polyester according to the present invention, which includes the 2,5-furandicarboxylic acid unit, has increased surface hardness is inferred as follows.

The 2,5-furandicarboxylic acid unit is less likely to rotate and such furan rings have high planarity, so that the furan rings inferentially tend to form a packed structure.

The polyester according to the present invention may include, as the dicarboxylic acid unit, a structural unit other than the 2,5-furandicarboxylic acid unit. Examples of a dicarboxylic acid that forms such another dicarboxylic acid unit include aliphatic dicarboxylic acids such as oxalic acid, succinic acid, glutaric acid, adipic acid, sebacic acid, dimer acid, and dodecanedioic acid; alicyclic dicarboxylic acids such as 1,6-cyclohexanedicarboxylic acid; and aromatic dicarboxylic acids such as terephthalic acid, isophthalic acid, naphthalenedicarboxylic acid, and diphenyldicarboxylic acid. The dicarboxylic acid unit other than 2,5-furandicarboxylic acid in the polyester according to the present invention may be of a single species alone or two or more desired species combined in a desired ratio.

The dicarboxylic acid unit preferably has a high content of the 2,5-furandicarboxylic acid unit, which tends to result in increased hardness of the polyester. Thus, relative to 100 mol% of all the dicarboxylic acid units, the 2,5-furandicarboxylic acid unit content is ordinarily 50 mol% or more, preferably 70 mol% or more, more preferably 80 mol% or more, still more preferably 90 mol% or more. Most preferably, all the dicarboxylic acid units are 2,5-furandicarboxylic acid units. In other words, in the polyester according to the present invention, the content of the dicarboxylic acid unit other than the 2,5-furandicarboxylic acid unit relative to 100 mol% of all the dicarboxylic acid units of the polyester according to the present invention is ordinarily 50 mol% or less, preferably 30 mol% or less, more preferably 20 mol% or less, still more preferably 10 mol% or less. Most preferably, the polyester according to the present invention does not include any dicarboxylic acid unit other than the 2,5-furandicarboxylic acid unit.

### <Diol unit>

The polyester according to the present invention includes a diol unit. Thus, the polyester according to the present invention is produced from a diol serving as a raw material. The diol unit of the polyester according to the present invention is not particularly limited.

Examples of a diol forming the diol unit of the polyester according to the present invention include aliphatic diols such as 1,2-ethanediol, 2,2'-oxydiethanol, 2,2'-(ethylenedioxy)diethanol, 1,3-propanediol, 1,2-propanediol, 1,4-butanediol, 1,5-pentanediol, and 1,6-hexanediol; alicyclic diols such as 1,4-cyclohexanediol, 1,4-cyclohexanedimethanol, and isosorbide; and aromatic diols such as xylylene glycol, 4,4'-dihydroxybiphenyl, 2,2-bis(4'-hydroxyphenyl)propane, 2,2-bis(4'-β-hydroxyethoxyphenyl)propane, bis(4-hydroxyphenyl)sulfone, and bis(4-β-hydroxyethoxyphenyl)sulfone.

The diol unit of the polyester according to the present invention may be of a single species alone or two or more desired species combined in a desired ratio.

Of these, the diol is, from the viewpoint of increasing the surface hardness of the polyester layer according to the present invention, preferably an aliphatic diol such as 1,4-butanediol, 1,2-ethanediol, or 1,3-propanediol, more preferably 1,4-butanediol or 1,2-ethanediol, particularly preferably 1,2-ethanediol.

The reason why the polyester according to the present invention that includes such a preferred diol unit provides the increased surface hardness of the polyester layer is inferred as follows.

The diol has a short carbon chain, so that the polyester has a rigid structure, and the molecular motion is inferentially less likely to occur.

In the polyester according to the present invention, the content of the preferred diol unit relative to 100 mol% of all the diol units of the polyester according to the present invention is ordinarily 50 mol% or more, preferably 70 mol% or more, more preferably 80 mol% or more, still more preferably 90 mol% or more. Most preferably, in the polyester according to the present invention, all the diol units are the preferred diol units.

As described above, the diol unit of the polyester according to the present invention preferably includes 1,2-ethanediol as a main structural unit. The 1,2-ethanediol content relative to 100 mol% of all the diol units of the polyester according to the present invention is ordinarily 50 mol% or more, preferably 70 mol% or more, more preferably 80 mol% or more, still more preferably 90 mol% or more, most preferably 100 mol%.

The polyester according to the present invention particularly preferably includes, as the dicarboxylic acid unit, the 2,5-furandicarboxylic acid unit and, as the diol unit, the preferred diol unit. The reason for this is that suppression of the rotational motion due to the 2,5-furandicarboxylic acid unit and the rigidity due to the short carbon chain of the diol result in increased surface hardness of the polyester layer according to the present invention.

### <Structural unit derived from another copolymerizable component>

The polyester according to the present invention may include, in addition to the dicarboxylic acid unit and the diol unit, a structural unit derived from another copolymerizable component. Such another copolymerizable component is, for example, a tri- or higher functional compound including functional groups.

Examples of the tri- or higher functional compound including functional groups include tri- or higher functional polyalcohols, tri- or higher functional polycarboxylic acids (or their anhydrides, acid chlorides, or lower-alkyl esters), tri- or higher functional hydroxycarboxylic acids (or their anhydrides, acid chlorides, or lower-alkyl esters), and tri- or higher functional amines.

Examples of the tri- or higher functional polyalcohols include glycerol, trimethylolpropane, and pentaerythritol.

Of these, employed may be of a single species alone or two or more desired species combined in a desired ratio.

Examples of the tri- or higher functional polycarboxylic acids or their anhydrides include trimesic acid, propanetricarboxylic acid, trimellitic anhydride, pyromellitic anhydride, benzophenonetetracarboxylic anhydride, and cyclopentatetracarboxylic anhydride.

Of these, employed may be of a single species alone or two or more desired species combined in a desired ratio.

Examples of the tri- or higher functional hydroxycarboxylic acids include malic acid, hydroxyglutaric acid, hydroxymethylglutaric acid, tartaric acid, citric acid, hydroxyisophthalic acid, and hydroxyterephthalic acid. Of these, employed may be of a single species alone or two or more desired species combined in a desired ratio.

In the polyester according to the present invention, the content of the structural unit derived from another copolymerizable component is preferably high from the viewpoint of melt viscosity. On the other hand, in the polyester according to the present invention, the content of the structural unit derived from another copolymerizable component is preferably low from the viewpoint that polymer crosslinking appropriately proceeds, strands are easily extracted with stability, and moldability and mechanical properties are excellent. Thus, in the polyester according to the present invention, the content of the structural unit derived from another copolymerizable component relative to 100 mol% of the total of all the structural units of the polyester according to the present invention is preferably 5 mol% or less, particularly preferably 4 mol% or less, especially preferably 3 mol% or less.

In the polyester according to the present invention, the total content of the dicarboxylic acid unit and the diol unit relative to 100 mol% of the total of all the structural units of the polyester according to the present invention is preferably 95 mol% or more, particularly preferably 96 mol% or more, especially preferably 97 mol% or more.

### <Chain extender>

In the production of the polyester according to the present invention, a chain extender such as a carbonate compound, a diisocyanate compound, a dioxazoline compound, or a silicate may be used. For example, in the production of the polyester according to the present invention, a carbonate compound such as diphenyl carbonate may be used in an amount of, relative to 100 mol% of all the structural units of the polyester, 20 mol% or less, preferably 10 mol% or less, to obtain polyester carbonate.

In this case, specific examples of the carbonate compound include diphenyl carbonate, ditolyl carbonate, bis(chlorophenyl) carbonate, m-cresyl carbonate, dinaphthyl carbonate, dimethyl carbonate, diethyl carbonate, dibutyl carbonate, ethylene carbonate, diamyl carbonate, and dicyclohexyl carbonate. In addition, carbonate compounds derived from hydroxy compounds such as phenols and alcohols and constituted by the same or different hydroxy compounds are also usable during production of the polyester according to the present invention.

Specific examples of the diisocyanate compound include publicly known diisocyanates such as 2,4-tolylene diisocyanate, a mixture of 2,4-tolylene diisocyanate and 2,6-tolylene diisocyanate, diphenylmethane diisocyanate, 1,5-naphthylene diisocyanate, xylylene diisocyanate, hydrogenated xylylene diisocyanate, hexamethylene diisocyanate, and isophorone diisocyanate.

Specific examples of the silicate include tetramethoxysilane, dimethoxydiphenylsilane, dimethoxydimethylsilane, and diphenyldihydroxysilane.

In order to increase the melt tension, a small amount of peroxide may be used during production of the polyester according to the present invention.

Of these, employed may each be of a single species alone or two or more desired species combined in a desired ratio.

### <End-capping agent>

During production of the polyester according to the present invention, the end groups of the polyester may be capped with a carbodiimide, an epoxy compound, or a monofunctional alcohol or carboxylic acid.

In this case, examples of the carbodiimide compound used as the end-capping agent include compounds intramolecularly having one or more carbodiimide groups (encompassing polycarbodiimide compounds). Specific examples include monocarbodiimide compounds such as dicyclohexylcarbodiimide, diisopropylcarbodiimide, dimethylcarbodiimide, diisobutylcarbodiimide, dioctylcarbodiimide, t-butylisopropylcarbodiimide, diphenylcarbodiimide, di-t-butylcarbodiimide, di-β-naphthylcarbodiimide, and N,N'-di-2,6-diisopropylphenylcarbodiimide.

These capping agents for the end groups of the polyester may be used alone or in combination of desired two or more thereof combined in a desired ratio.

### <Method for producing polyester>

As a method for producing a polyester according to the present invention, a publicly known method for producing a polyester resin can be employed. In this case, reaction conditions can be appropriately selected from publicly known reaction conditions having been employed, and are not particularly limited.

Specifically, the polyester according to the present invention can be produced by subjecting a diol and a dicarboxylic acid component including a 2,5-furandicarboxylic acid component as an essential component to an esterification reaction or a transesterification reaction, and then subjected to a polycondensation reaction.

The term "... component" used herein means, in the polyester, a compound that is to serve as a unit of the polyester. Specifically, the term "2,5-furandicarboxylic acid component" means, in the polyester, 2,5-furandicarboxylic acid and/or a derivative thereof that is to serve as the 2,5-furandicarboxylic acid unit. The term "dicarboxylic acid component" means, in the polyester, a dicarboxylic acid and/or a derivative thereof that is to serve as the dicarboxylic acid unit.

The species and the like of the raw materials such as the dicarboxylic acid and/or the derivative thereof, the diol, and the other copolymerizable component used for producing the polyester according to the present invention are described above. Specifically, the dicarboxylic acid serving as a raw material of the polyester according to the present invention may include, in addition to the 2,5-furandicarboxylic acid component, another dicarboxylic acid component (such as a dicarboxylic acid, an anhydride of a dicarboxylic acid, a lower-alkyl ester (the alkyl group having 1 to 4 carbon atoms) of a dicarboxylic acid, or a chloride of a dicarboxylic acid). The diol serving as a raw material of the polyester according to the present invention is preferably 1,2-ethanediol. Another copolymerizable component or the like may be additionally used in accordance with, for example, desired properties. During the reaction, the above-described chain extender or end-capping agent may be used in accordance with, for example, desired properties.

The esterification or transesterification reaction is ordinarily performed in the following manner: the dicarboxylic acid component, the diol, and an optionally used other copolymerizable component or the like are charged into a reaction vessel equipped with a stirrer and a distilling column, and caused to react preferably in the presence of a catalyst, in an inert gas atmosphere, under a reduced pressure, and under stirring. In this case, the reaction is caused to proceed while by-products such as water from the reaction are driven off to the outside of the system. The ratio of the raw materials, specifically, the molar ratio of the diol to the dicarboxylic acid component is ordinarily 1.0 to 2.0.

### <Catalyst>

As the catalyst used for producing the polyester according to the present invention, a desirable catalyst usable for producing the polyester such as polyethylene terephthalate can be selected. Suitable examples include compounds of metals such as germanium, titanium, zirconium, hafnium, antimony, tin, magnesium, calcium, zinc, aluminum, cobalt, lead, cesium, manganese, lithium, potassium, sodium, copper, barium, and cadmium. Of these, from the viewpoint of high activity, preferred catalysts include germanium compounds, titanium compounds, magnesium compounds, tin compounds, zinc compounds, and lead compounds, and most preferred are titanium compounds.

The titanium compounds used as catalysts are not particularly limited. Preferred examples include organic titanium compounds such as tetraalkoxy titanates including tetrapropyl titanate, tetrabutyl titanate, tetraethyl titanate, tetrahydroxyethyl titanate, and tetraphenyl titanate. Of these, from the viewpoint of, for example, the cost and availability, preferred examples include tetrapropyl titanate and tetrabutyl titanate; from the viewpoint of high activity, the most preferred catalyst is tetrabutyl titanate.

These catalysts may be used alone or in combination of desired two or more thereof combined in a desired ratio.

The catalyst is preferably used in a large amount because the polymerization reaction proceeds at a high rate. On the other hand, the catalyst is preferably used in a small amount from the viewpoint of the cost of catalyst, reduction in the residual amount of catalyst in the polyester, and high stability of the polyester. Thus, for the amount of catalyst used, in terms of metal derived from the catalyst and remaining in the resultant polyester, the lower limit is preferably 0.0001 wt%, more preferably 0.0005 wt%, still more preferably 0.001 wt%. The upper limit is preferably 1 wt%, more preferably 0.5 wt%, still more preferably 0.1 wt%.

The timing at which the catalyst is added to the raw material composition of the polyester is not particularly limited as long as the catalyst functions during production of the polyester. Specifically, the catalyst may be added at the time of charging of the raw materials, or may be added at the time of start of reduction of the pressure. The catalyst may be added in portions at the time of charging of the raw materials and at the time of start of reduction of the pressure.

### <Reaction conditions>

The polyester according to the present invention is produced ordinarily by increasing the degree of polymerization while distillate generated by esterification or transesterification is driven off to the outside of the system. The reaction is caused to proceed due to heating and a reduced pressure.

The reaction temperature is preferably high from the viewpoint that the resultant polyester tends to have a sufficient degree of polymerization. On the other hand, the reaction temperature is preferably low from the viewpoint of suppressing thermal decomposition or coloration of the polyester and side reactions such as thermal decomposition or generation of an ether compound as a by-product due to cyclization of the diol, and suppressing an excessive increase in the end acid value of the polyester. Specifically, the reaction temperature is ordinarily 150°C or more, preferably 160°C or more. On the other hand, the reaction temperature is ordinarily 300°C or less, preferably 290°C or less, still more preferably 280°C or less.

The reaction is preferably performed under the following conditions: at the time of reaching to a desired temperature, reduction in the pressure is started, and the final reduced pressure is ordinarily 1.33 × 10³ Pa or less, preferably 0.40 × 10³ Pa or less. The time for reduction in the pressure is ordinarily 1 hour or more, preferably 2 to 15 hours.

The above-described polyester obtained by melt polymerization may be further subjected to solid phase polymerization of performing polymerization at a temperature equal to or lower than the melting point. The polyester according to the present invention has high planarity and hence has crystallinity. Thus, the above-described polyester obtained by melt polymerization can be further subjected to solid phase polymerization, to thereby achieve an increase in the molecular weight.

In the case of performing solid phase polymerization, ordinarily, the polyester in the form of pellets or powder is heated under a nitrogen gas atmosphere or under a reduced pressure. In this case, the temperature conditions are selected ordinarily from the range of 80 to 260°C, preferably 100 to 250°C. The solid phase polymerization is ordinarily performed to cause a polymerization reaction at a temperature lower than that in the melt polymerization. Thus, in the case of performing the solid phase polymerization, compared with the case of performing the melt polymerization alone, side reactions such as thermal decomposition or hydrolysis of the polyester are suppressed, and the resultant polyester tends to have a low end acid value, less coloration, and a high molecular weight.

### <Additives>

During production of the polyester according to the present invention, as long as its properties are not degraded, various additives may be used. Examples of the additives include heat stabilizers, antioxidants, hydrolysis inhibitors, nucleating agents, flame retardants, antistatic agents, release agents, and ultraviolet absorbents.

These additives may be added to the reaction system before the polymerization reaction, may be added from the initiation of the polymerization reaction and before the completion of the polymerization reaction, or may be added after the completion of the polymerization reaction and before extraction of the product. Alternatively, the additives may be added to the extracted product. Alternatively, during molding of the polyester, a nucleating agent, a reinforcing agent, an extending agent, and the like may be added and molded together with the polyester.

In the production of the polyester according to the present invention, various fillers may be used. In the production of the polyester, the fillers function as, for example, an agent for improving the rigidity of the polyester and a lubricant. The filler content of the polyester according to the present invention is preferably high because the effect provided by adding the filler tends to be sufficiently exerted. The filler content of the polyester according to the present invention is preferably low because, in the resultant polyester, the tensile elongation and impact resistance of the polyester itself tend to be maintained.

The filler used for producing the polyester may be inorganic or organic.

Examples of the inorganic filler include anhydrous silica, mica, talc, titanium oxide, calcium carbonate, diatomaceous earth, allophane, bentonite, potassium titanate, zeolite, sepiolite, smectite, kaolin, kaolinite, glass, limestone, carbon, wollastonite, calcined perlite, silicates such as calcium silicate and sodium silicate, aluminum oxide, magnesium carbonate, hydroxides such as calcium hydroxide, and salts such as iron(II) carbonate, zinc oxide, iron oxide, aluminum phosphate, and barium sulfate. These inorganic fillers may be used alone or in combination of desired two or more thereof combined in a desired ratio.

The polyester ordinarily has an inorganic filler content of 1 wt% or more, preferably 3 wt% or more, still more preferably 5 wt% or more. The polyester ordinarily has an inorganic filler content of 80 wt% or less, preferably 70 wt% or less, still more preferably 60 wt% or less.

Examples of the organic filler include raw starch, processed starch, pulp, chitin and chitosan, coconut husk powder, bamboo powder, bark powder, and powders of, for example, kenaf or straw. Other examples of the organic filler include nanofiber cellulose obtained by defibrating fibers of, for example, pulp so as to have nanometer sizes. These organic fillers may be used alone or in combination of desired two or more thereof combined in a desired ratio.

The polyester ordinarily has an organic filler content of 0.1 wt% or more, preferably 1 wt% or more. The polyester ordinarily has an organic filler content of 70 wt% or less, preferably 50 wt% or less.

Examples of the nucleating agent used for producing the polyester according to the present invention include glass fiber, carbon fiber, titanium whisker, mica, talc, boron nitride, CaCO₃, TiO₂, silica, layered silicate, polyethylene wax, and polypropylene wax. Of these, preferred nucleating agents are talc, boron nitride, silica, layered silicate, polyethylene wax, and polypropylene wax, particularly preferred are talc and polyethylene wax. These nucleating agents may be used alone or in combination of desired two or more thereof combined in a desired ratio.

When the nucleating agent is an inorganic material, it preferably has small particle sizes from the viewpoint of the effect provided by adding the nucleating agent. The nucleating agent preferably has an average particle size of 5 µm or less, more preferably 3 µm or less, still more preferably 1 µm or less, most preferably 0.5 µm or less. The lower limit of the average particle size of the nucleating agent is ordinarily 0.1 µm.

The amount of nucleating agent used in production of the polyester according to the present invention is, relative to the polyester, preferably 0.001 wt% or more, more preferably 0.01 wt% or more, still more preferably 0.1 wt% or more. The upper limit of the amount of nucleating agent relative to the polyester is preferably 30 wt%, more preferably 10 wt%, still more preferably 5 wt%, most preferably 1 wt%. The nucleating agent is preferably used in a large amount from the viewpoint that the effect of promoting crystallization tends to be sufficiently provided. The nucleating agent is preferably used in a small amount from the viewpoint that, for example, the mechanical properties and flexibility of the polyester itself tend to be sufficiently provided.

Some additives that are not the above-described nucleating agents and have other intended functions may serve as nucleating agents. For example, inorganic fillers used for improving the rigidity, organic stabilizers used as heat stabilizers, and foreign matter incorporated during production or molding of resin can serve as nucleating agents. Thus, the nucleating agent in the present invention encompasses fine substances that are solid at ordinary temperature and contribute to crystal growth.

### [Polyester layer according to the present invention]

The polyester layer according to the present invention constituting the multilayer body according to the present invention is produced by molding, into the shape of, for example, a film or a sheet, the above-described polyester according to the present invention or a polyester composition containing the polyester according to the present invention.

In general, "film" and "sheet" each refer to an article that has a shape in which the thickness is smaller than the length and the width. In general, "film" refers to an article that has a shape in which the thickness is much smaller than the length and the width. Roll-shaped articles are often referred to as "films". In general, "sheet" refers to an article that has a larger thickness and is smaller than the film. The definitions of the film and the sheet are described in JIS Standard K6900. However, the sheet and the film are not defined with a clear boundary therebetween. In addition, in the present invention, these need not be distinguished from each other. Thus, "film" in the present invention encompasses, in addition to articles having shapes generally referred to as "film", articles having shapes generally referred to as "sheet".

### <Shape of polyester layer>

The shape of the polyester layer according to the present invention is not limited to the above-described film or sheet, and may be, for example, a plate having a larger thickness, a block, or a mass. The polyester layer according to the present invention is not limited to a planar shape, and may have a curved shape, or an amorphous shape such as a shape having irregularities.

The polyester layer according to the present invention is not particularly limited in terms of thickness. The thickness of the polyester layer is appropriately selected in accordance with the application. The polyester layer preferably has a large thickness from the viewpoint of mechanical strength and handling. The polyester layer preferably has a small thickness from the viewpoint of the production costs. Thus, the thickness of the polyester layer according to the present invention is preferably 10 µm or more, more preferably 20 µm or more. The polyester layer according to the present invention preferably has a thickness of 500 µm or less, more preferably 250 µm or less, still more preferably 200 µm or less, particularly preferably 125 µm or less, most preferably 75 µm or less.

Examples of the application of the multilayer body according to the present invention include substrates of decorative molding films such as insert-molding sheets or in-mold transfer sheets. In such applications, the polyester layer according to the present invention preferably has a thickness of 10 to 250 µm, particularly preferably 10 to 125 µm.

When the multilayer body according to the present invention is used as an ITO substrate film or a display cover sheet, the polyester layer preferably has a thickness of 10 to 188 µm, particularly preferably 10 to 125 µm.

In particular, from the viewpoint that the multilayer body according to the present invention tends to exhibit curling resistance, the polyester layer is preferably a thin film having a thickness of 10 to 75 µm.

### <Method of molding polyester layer>

The polyester layer according to the present invention can be obtained by a molding method such as extrusion or injection molding.

In the case of forming the polyester layer by extrusion, the die of the extruder is preferably set ordinarily at 220 to 280°C, and the cast roll is preferably set at about 25 to about 80°C.

In the case of forming the polyester layer by injection molding, ordinarily, the heating cylinder is preferably set at 220 to 280°C, and the mold is preferably set at about 40 to about 80°C.

Of these molding methods, extrusion is preferred because it easily provides large-area multilayer bodies, specifically, multilayer bodies that have a large width and a large length, which are limited in the case of injection molding.

### <Composition of polyester layer>

The polyester layer according to the present invention contains polyester as a main component. The polyester layer according to the present invention preferably has a polyester content of 50 wt% or more, particularly preferably 70 wt% or more, especially preferably 90 wt% or more. In the polyester layer, the upper limit of the polyester content is 100 wt%.

The polyester contained in the polyester layer according to the present invention contains the above-described polyester according to the present invention as a main component. In the polyester layer, the content of the polyester according to the present invention is preferably high from the viewpoint of achieving an increase in the surface pencil hardness. On the other hand, in the polyester layer, the content of the polyester according to the present invention is preferably low from the viewpoint of facilitating exertion of the effects provided by using the above-described copolymerizable component, additives, and the like other than the polyester. Thus, in the polyester layer according to the present invention, the content of the polyester according to the present invention is preferably 50 wt% or more, particularly preferably 70 wt% or more, especially preferably 90 wt% or more. In the polyester layer according to the present invention, the upper limit of the content of the polyester according to the present invention is 100 wt%.

### <Properties of polyester layer>

As described above, the polyester layer according to the present invention can be formed as a layer having high surface hardness. In general, the surface hardness of resin layers and the like is determined as surface pencil hardness. The surface pencil hardness of resin layers and the like can be measured by a method described later in EXAMPLES. The polyester layer according to the present invention preferably has a high surface pencil hardness from the viewpoint that the multilayer body tends to have a high hardness without including a thick hard-coat layer. The polyester layer according to the present invention preferably has a surface pencil hardness of H or higher, more preferably 2H or higher. The upper limit of the surface pencil hardness of the polyester layer according to the present invention is ordinarily 9H.

In general, the flexural modulus of elasticity of resin is an index of the strength of the resin. The flexural modulus of elasticity of polyester can be measured by a method described later in EXAMPLES. In the polyester layer according to the present invention, the flexural modulus of elasticity of the polyester is not particularly limited, but is preferably high from the viewpoint of surface hardness. In the polyester layer according to the present invention, the polyester preferably has a flexural modulus of elasticity of 2500 MPa or more, more preferably 2800 MPa or more, still more preferably 3000 MPa or more. On the other hand, in the polyester layer according to the present invention, the polyester preferably has a flexural modulus of elasticity of 4000 MPa or less, more preferably 3800 MPa or less, still more preferably 3600 MPa or less. In the polyester layer according to the present invention, the polyester particularly preferably has a flexural modulus of elasticity of 2500 to 4000 MPa.

The reduced viscosity (ηsp/c) of resin is a property mainly correlating with the fluidity of the resin during molding. In the polyester layer according to the present invention, the reduced viscosity (ηsp/c) of the polyester is not particularly limited, but is preferably high from the viewpoint of moldability into a film and from the viewpoint that the molded article tends to have increased strength. On the other hand, the reduced viscosity of the polyester is preferably low from the viewpoint that the resin composition exhibits high fluidity during formation of the polyester layer, and exhibits high moldability during injection molding of the polyester layer. Thus, the reduced viscosity that satisfies a specific range provides high moldability during molding of the polyester layer as a film or during molding of the polyester layer by injection molding, and the resultant molded article tends to have increased strength. In the polyester layer according to the present invention, the polyester preferably has a reduced viscosity of 0.5 dL/g or more, more preferably 0.6 dL/g or more, still more preferably 0.7 dL/g or more. On the other hand, in the polyester layer according to the present invention, the polyester preferably has a reduced viscosity of 4.0 dL/g or less, more preferably 3.8 dL/g or less, still more preferably 3.5 dL/g or less. Particularly preferably, in the polyester layer according to the present invention, the polyester has a reduced viscosity of 0.5 to 4 dL/g. In the polyester layer, the reduced viscosity (ηsp/c) of the polyester can be measured by a method described later in EXAMPLES.

### [Hard-coat layer]

The multilayer body according to the present invention includes the polyester layer and the hard-coat layer according to the present invention.

The multilayer body according to the present invention may include a hard-coat layer only on one of the surfaces of the polyester layer according to the present invention, or may include hard-coat layers on a plurality of surfaces of the polyester layer according to the present invention. Specifically, when the polyester layer according to the present invention is a film, such a hard-coat layer may be disposed on only one of or each of the surfaces of the polyester layer.

In the present invention, the hard-coat layer refers to a layer that has a function of improving the surface hardness of the multilayer body according to the present invention. Thus, the hard-coat layer according to the present invention preferably has a surface pencil hardness that is equal to or higher than the surface pencil hardness of the polyester layer according to the present invention, more preferably higher than the surface pencil hardness of the polyester layer according to the present invention. The multilayer body according to the present invention includes the hard-coat layer, to thereby have improved surface hardness, to achieve improvement in scratch resistance and the like. In the multilayer body according to the present invention, the surface pencil hardness of the hard-coat layer is not particularly limited, but is preferably B or higher, more preferably H or higher, still more preferably 2H or higher.

In the present invention, comparison between the surface pencil hardness of the hard-coat layer and the surface pencil hardness of the polyester layer can be achieved by comparison between the surface pencil hardness of the multilayer body including the hard-coat layer and the surface pencil hardness of the polyester layer of the multilayer body from which the hard-coat layer has been removed. The phrase "surface pencil hardness of the hard-coat layer" used herein means the surface pencil hardness of the hard-coat layer that has such a thickness that the surface pencil hardness is not affected by the underlying layer. In EXAMPLES described later, for a hard-coat layer having a thickness of 30 µm and disposed on a 188 µm polyethylene terephthalate film, the surface pencil hardness on the hard-coat side was measured as the surface pencil hardness of the hard-coat layer alone.

The indentation modulus of elasticity of, for example, a resin layer is an index of the flexibility of the resin layer. The hard-coat layer preferably has a high indentation modulus of elasticity from the viewpoint that the hard-coat layer tends to have high hardness. The hard-coat layer preferably has a low indentation modulus of elasticity from the viewpoint that the hard-coat layer has high flexibility. Thus, in the multilayer body according to the present invention, the hard-coat layer preferably has an indentation modulus of elasticity of 10 MPa or more, more preferably 30 MPa or more, still more preferably 50 MPa or more, most preferably 100 MPa or more. On the other hand, in the multilayer body according to the present invention, the hard-coat layer preferably has an indentation modulus of elasticity of 10000 MPa or less, more preferably 8000 MPa or less, particularly preferably 5000 MPa or less, most preferably 3000 MPa or less. The phrase "indentation modulus of elasticity of the hard-coat layer" means the indentation modulus of elasticity of the hard-coat layer that has such a thickness that the indentation modulus of elasticity is not affected by the underlying layer. In Examples 3 and 4 described later, for a hard-coat layer having a thickness of 13 µm and disposed on a polyester film, the indentation modulus of elasticity on the hard-coat side was measured as the indentation modulus of elasticity of the hard-coat layer alone.

In the multilayer body according to the present invention, the hard-coat layer is not particularly limited as long as it is formed from an ordinarily used hard-coat agent. Examples of the hard-coat agent include organic hard-coat agents represented by (meth)acrylate and epoxy, and inorganic hard-coat agents represented by polysiloxane (-Si-O-)ₙ. Of these, because the resultant hard-coat layer has high flexibility, the hard-coat agent is preferably an organic hard-coat agent, more preferably a (meth)acrylate. In particular, because of high adhesion to the polyester layer and high flexibility, the hard-coat agent is preferably urethane (meth)acrylate. The term "(meth)acrylate" used herein means one or both of "acrylate" and "methacrylate".

The hard-coat layer preferably contains a crosslinked resin, more preferably contains an acrylic resin, particularly preferably an acrylic resin having a polyfunctional (meth)acrylate structure. The acrylic resin having a polyfunctional (meth)acrylate structure may be an acrylic resin or a urethane acrylic resin.

The (meth)acrylate serving as the starting monomer of the acrylic resin is not particularly limited. Examples of the (meth)acrylate include alkyl (meth)acrylates such as methyl (meth)acrylate, n-butyl (meth)acrylate, 2-ethylhexyl (meth)acrylate, lauryl (meth)acrylate, stearyl (meth)acrylate, cyclohexyl (meth)acrylate, and isobornyl (meth)acrylate; hydroxyalkyl (meth)acrylates such as hydroxyethyl (meth)acrylate, hydroxypropyl (meth)acrylate, and hydroxybutyl (meth)acrylate; alkoxyalkyl (meth)acrylates such as methoxyethyl (meth)acrylate, ethoxyethyl (meth)acrylate, methoxypropyl (meth)acrylate, and ethoxypropyl (meth)acrylate; aromatic (meth)acrylates such as benzyl (meth)acrylate and phenoxyethyl (meth)acrylate; amino-group-containing (meth)acrylates such as diaminoethyl (meth)acrylate and diethylaminoethyl (meth)acrylate; ethylene oxide-modified (meth)acrylates such as methoxyethylene glycol (meth)acrylate, phenoxypolyethylene glycol (meth)acrylate, and phenylphenolethylene oxide-modified (meth)acrylate; monofunctional (meth)acrylates such as glycidyl (meth)acrylate, tetrahydrofurfuryl (meth)acrylate, and (meth)acrylic acid; alkanediol di(meth)acrylates such as 1,4-butanediol di(meth)acrylate, neopentyl glycol di(meth)acrylate, 1,6-hexanediol di(meth)acrylate, 1,9-nonanediol di(meth)acrylate, and tricyclodecanedimethylol di(meth)acrylate; bisphenol-modified di(meth)acrylates such as bisphenol A ethylene oxide-modified di(meth)acrylate and bisphenol F ethylene oxide-modified di(meth)acrylate; bifunctional (meth)acrylates such as polyethylene glycol di(meth)acrylate, polypropylene glycol di(meth)acrylate, urethane di(meth)acrylate, and epoxy di(meth)acrylate; and tri- or higher functional polyfunctional (meth)acrylates such as dipentaerythritol hexa(meth)acrylate, dipentaerythritol penta(meth)acrylate, pentaerythritol tetra(meth)acrylate, ditrimethylolpropane tetra(meth)acrylate, pentaerythritol tri(meth)acrylate, trimethylolpropane tri(meth)acrylate, tetramethylolmethane ethylene oxide-modified tetra(meth)acrylate, isocyanuric acid-modified tri(meth)acrylates such as isocyanuric acid ethylene oxide-modified tri(meth)acrylate and ε-caprolactone-modified tris(acryloxyethyl) isocyanurate, and urethane (meth)acrylates such as a pentaerythritol tri(meth)acrylate hexamethylene diisocyanate urethane prepolymer, a pentaerythritol triacrylatetoluene diisocyanate urethane prepolymer, and a dipentaerythritol penta(meth)acrylate hexamethylene diisocyanate urethane prepolymer.

As a hard-coat treatment process for forming the hard-coat layer according to the present invention, preferred examples include a thermosetting process using, for example, polyorganosiloxane or crosslinkable acrylic, and an ultraviolet curing process using an ultraviolet curable resin composition in which, to a combination of a plurality of monofunctional or polyfunctional (meth)acrylate monomers or oligomers as hard-coat agents, a photopolymerization initiator is added as a curing catalyst.

Some of such hard-coat agents are commercially available as hard-coat agents for polyester, and can be appropriately selected and used in accordance with, for example, hardness and handleability. As needed, such a hard-coat agent may appropriately contain, for example, a defoaming agent, a leveling agent, a thickener, an antistatic agent, and an antifogging agent.

The hard-coat agent used for forming the hard-coat layer according to the present invention may contain, for the purpose of providing increased surface hardness, a silicon-containing polymer represented by polysiloxane (-Si-O-)ₙ. The polysiloxane is preferably produced by hydrolyzing a silane compound in the presence of acid.

Examples of the silane compound include chlorosilanes such as methyltrichlorosilane, dimethyldichlorosilane, trimethylchlorosilane, and phenyltrichlorosilane; alkoxysilanes such as methyltrimethoxysilane, dimethyldimethoxysilane, phenyltrimethoxysilane, tetraethoxysilane, methyltriethoxysilane, dimethyldiethoxysilane, phenyltriethoxysilane, n-propyltrimethoxysilane, n-propyltriethoxysilane, hexyltrimethoxysilane, hexyltriethoxysilane, decyltrimethoxysilane, and trifluoropropyltrimethoxysilane; and silazanes such as hexamethyldisilazane.

Furthermore, the hard-coat agent may contain silica sol or fine particles of a metal oxide such as titanium oxide. The hard-coat agent that contains such metal oxide fine particles can provide further increased surface hardness of the multilayer body according to the present invention. The metal oxide fine particles can be produced by hydrolysis of metal alkoxide. The metal oxide fine particles are ordinarily obtained as uniform fine particles, and provide increased transparency, which is preferred. In this case, additional use of β-diketone provides a chelating effect to thereby achieve further increased surface hardness.

The hard-coat agent may contain a solution or fine particles of various rubbers such as silicone rubbers, polyurethane rubbers, and acrylonitrile rubbers; and various resins such as polysiloxane resins, acrylic resins, polyester resins, and polyurethane resins. When the hard-coat agent contains such components, the hard-coat layer has increased flexibility and becomes less likely to undergo cracking due to stress. In this case, from the viewpoint of the transparency of the hard-coat layer to be formed, the fine particles preferably have a small average particle size. Thus, the fine particles preferably have an average particle size of 300 nm or less, more preferably 150 nm or less. The fine particles ordinarily have an average particle size of 0.1 nm or more from the viewpoint of the easiness of production of the fine particles.

The hard-coat agent may contain, from the viewpoint of suppression of photodegradation of the polyester layer, an ultraviolet absorbent. Such a hard-coat agent containing an ultraviolet absorbent is used to form a hard-coat layer containing the ultraviolet absorbent, to thereby suppress photodegradation of the polyester layer. This results in increased adhesion between the polyester layer and the hard-coat layer, and increased weatherability.

As the ultraviolet absorbent, as long as it does not degrade the performance of the hard-coat agent, publicly known inorganic and organic ultraviolet absorbents can be used. Of these, known inorganic ultraviolet absorbents that are fine particles of inorganic oxides such as titanium oxide (TiO₂), cerium oxide (CeO₂), zinc oxide (ZnO), zirconium oxide (ZrO₂), tin oxide (SnO₂), and indium oxide (In₂O₃, ITO) provide increased surface hardness, which is particularly preferred. In the case of using such inorganic oxide fine particles, use of a hydrolysis product of metal alkoxide and β-diketone provides increased adhesion, which is preferred.

The ultraviolet absorbent content relative to 100 parts by weight of the hard-coat layer is preferably about 0.1 to about 20 parts by weight. Such an ultraviolet absorbent content satisfying this range provides a multilayer body including a hard-coat layer that has high scratch resistance and a polyester layer that is less likely to undergo photodegradation. The ultraviolet absorbent content relative to 100 parts by weight of the hard-coat layer is more preferably 0.3 to 20 parts by weight, most preferably 0.5 to 10 parts by weight.

The thickness of the hard-coat layer can be set in accordance with the desired surface hardness of the multilayer body. The hard-coat layer preferably has a large thickness from the viewpoint that the multilayer body tends to have increased surface hardness. The hard-coat layer preferably has a small thickness from the viewpoint that the multilayer body is less likely to undergo deformation such as curling and has high processibility, high handleability, and high flexibility. As described above, the multilayer body according to the present invention includes the polyester layer including the 2,5-furandicarboxylic acid unit, to thereby have, even with a thin hard-coat layer, sufficient surface hardness. Stated another way, the polyester layer according to the present invention has high surface hardness to thereby achieve reduction in the thickness of the hard-coat layer for providing the desired surface hardness of the multilayer body. Thus, the hard-coat layer according to the present invention preferably has a thickness of 0.1 µm or more, more preferably 0.5 µm or more, particularly preferably 1.0 µm or more. On the other hand, the hard-coat layer according to the present invention preferably has a thickness of 30 µm or less, more preferably 20 µm or less, still more preferably 15 µm or less, particularly preferably 10 µm or less, most preferably 5.0 µm or less. The hard-coat layer preferably has a thickness of 0.1 to 10 µm, more preferably 1.0 to 5.0 µm.

As a process of performing a hard-coat treatment on the surface of the polyester layer to form the hard-coat layer, examples include processes using dipping, flow coating, spraying, a roll coater, or a flow coater. Another example of the process of forming the hard-coat layer is a process of extruding polyester into a film and subsequently, as an in-line step, continuously applying a hard-coat agent onto the substrate and curing the hard-coat agent. In the in-line coating process, ordinary coating means such as a roll coater, a flow coater, a bar coater, a gravure, a slot die, or a comma coater can be used. In particular, an in-line coating process using a solventless ultraviolet curable hard-coat agent is expected to provide advantages such as simplification of steps, reduction in the environmental load due to not using solvent, and reduction in the energy costs incurred by evaporation of solvent.

The multilayer body according to the present invention may include, between the polyester layer and the hard-coat layer according to the present invention, another layer such as a primer layer. The multilayer body according to the present invention may further include, on the hard-coat layer, a functional layer such as an antireflection layer or an antifouling layer and another layer such as a decorative layer.

### [Primer layer]

The multilayer body according to the present invention may include, between the polyester layer and the hard-coat layer according to the present invention, another layer. The layer disposed between the polyester layer and the hard-coat layer according to the present invention may be a layer generally referred to as a primer layer.

When the multilayer body according to the present invention includes the primer layer, the hard-coat layer becomes less likely to separate. The causes of separation of the hard-coat layer are inferred as follows:
(1) the difference in coefficients of linear expansion between the polyester layer and the hard-coat layer causes different degrees of expansion or shrinkage due to temperature changes, which results in exposure to stress;
(2) moisture in the air enters the hard-coat layer, which tends to degrade the hard-coat layer; and
(3) ultraviolet radiation tends to degrade the polyester layer.

Thus, in the multilayer body according to the present invention, the hard-coat layer is preferably formed on the polyester layer with a primer layer therebetween.

The primer layer generally refers to a layer disposed for the purpose of increasing the adhesion between the polyester layer and the hard-coat layer. The primer layer may contain, for the purpose of imparting properties such as hardness, abrasion resistance, or light resistance, different binder resins in combination, fine particles of, for example, metal, oxide, or resin, or an ultraviolet absorbent.

A binder resin contained in the primer layer is not particularly limited as long as it is an ordinary resin primer. Examples of the binder resin contained in the primer layer include epoxy resins, urethane resins, polyester resins, melamine resins, phenol resins, polyamides, ketone resins, vinyl resins, and various acrylic resins such as thermoplastic acrylic resins, thermosetting acrylic resins, moisture-curable acrylic resins, and acrylic resins modified with silane or siloxane. Such binder resins contained in the primer layer may be used alone or in combination of desired two or more thereof combined in a desired ratio.

Of these, acrylic resins, which exhibit high adhesion to the hard-coat layer, are preferably contained.

Such an acrylic resin is preferably a thermoplastic acrylic resin composed of a (meth)acrylic derivative that is an unreactive monomer. The acrylic resin is preferably at least partially thermosetting and/or moisture-curable from the viewpoint that curing easily proceeds. The thermosetting and/or moisture-curable acrylic resin is a copolymer including a (meth)acrylic derivative that is a reactive monomer. A publicly known crosslinking agent may be additionally used to accelerate curing.

Examples of the unreactive (meth)acrylic derivative include (meth)acrylates of monohydric alcohols such as methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, n-hexyl (meth)acrylate, 2-ethylhexyl (meth)acrylate, n-octyl (meth)acrylate, n-decyl (meth)acrylate, lauryl (meth)acrylate, stearyl (meth)acrylate, cyclohexyl (meth)acrylate, 4-methylcyclohexyl (meth)acrylate, 4-t-butylcyclohexyl (meth)acrylate, isobornyl (meth)acrylate, dicyclopentanyl (meth)acrylate, dicyclopentenyloxyethyl (meth)acrylate, and benzyl (meth)acrylate; (meth)acrylic monomers having a cyclic hindered amine structure; and ultraviolet absorptive group-containing (meth)acrylic derivatives such as 2-(2'-hydroxy-5'-(meth)acryloxyphenyl)-2H-benzotriazole, 2-[2'-hydroxy-5'-(2-(meth)acryloxyethyl)phenyl]-2H-benzotriazole, 2-[2'-hydroxy-3'-methyl-5'-(8-(meth)acryloxyoctyl)phenyl]-2H-benzotriazole, 2-hydroxy-4-(2-(meth)acryloxyethoxy)benzophenone, 2-hydroxy-4-(4-(meth)acryloxybutoxy)benzophenone, 2,2'-dihydroxy-4-(2-(meth)acryloxyethoxy)benzophenone, 2,4-dihydroxy-4'-(2-(meth)acryloxyethoxy)benzophenone, 2,2',4-trihydroxy-4'-(2-(meth)acryloxyethoxy)benzophenone, 2-hydroxy-4-(3-(meth)acryloxy-2-hydroxypropoxy)benzophenone, and 2-hydroxy-4-(3-(meth)acryloxy-1-hydroxypropoxy)benzophenone. Other monomers that are copolymerizable with these (meth)acrylic derivatives, such as polyolefin-based monomers and vinyl-based monomers, may be additionally used.

Examples of reactive group-containing (meth)acrylic derivatives include alkoxysilyl group-containing (meth)acrylic derivatives such as 3-(meth)acryloxypropyltrimethoxysilane, 3-(meth)acryloxypropyltriethoxysilane, 3-(meth)acryloxypropylmethyldimethoxysilane, 1-[3-(meth)acryloxypropyl]pentamethoxydisilane, 1-[3-(meth)acryloxypropyl]-1-methyl-tetramethoxydisilane, a hydrolysis-condensation product of 3-(meth)acryloxypropylsilane and tetramethoxy silane, and a hydrolysis-condensation product of 3-(meth)acryloxypropylsilane and methyltrimethoxysilane; mono(meth)acrylates of polyhydric alcohols such as 2-hydroxyethyl (meth)acrylate, 3-hydroxypropyl (meth)acrylate, 4-hydroxybutyl (meth)acrylate, glycerol mono(meth)acrylate, pentaerythritol mono(meth)acrylate, polyethylene glycol mono(meth)acrylate (the number of ethylene glycol units is, for example, 2 to 20), and polypropylene glycol mono(meth)acrylate (the number of propylene glycol units is, for example, 2 to 20); (meth)acrylic acids such as (meth)acrylic acid; amino group-containing (meth)acrylates such as 2-aminoethyl (meth)acrylate and 2-(N-methylamino)ethyl (meth)acrylate; and epoxy group-containing (meth)acrylates such as glycidyl (meth)acrylate.

Examples of the monomer having a group reactive to a crosslinking agent include (meth)acrylic acid, glycidyl (meth)acrylate, hydroxypropyl (meth)acrylate, acrylic (meth)acrylate, 2-hydroxyethyl (meth)acrylate, 2-(meth)acryloyloxyethyl succinate, 2-(meth)acryloyloxyethyl maleate, 2-(meth)acryloyloxyethyl phthalate, 2-(meth)acryloyloxyethyl hexahydrophthalate, dimethylaminoethyl (meth)acrylate, and diethylaminoethyl (meth)acrylate.

These may be polymerized and used in the form of homopolymers or copolymers of two or more desired monomer species combined in a desired ratio.

The crosslinking agent is not particularly limited as long as it achieves crosslinking among crosslinking points in the acrylic resin. The crosslinking agent is preferably at least selected from epoxy-based compounds, carbodiimide-based compounds, oxazoline-based compounds, hydrazide-based compounds, isocyanate-based compounds, aziridine-based compounds, amine-based compounds, and metal chelate-based compounds. In particular, preferred are epoxy-based compounds, carbodiimide-based compounds, and oxazoline-based compounds.

Examples of the epoxy-based compounds include sorbitol polyglycidyl ether, polyglycerol polyglycidyl ether, pentaerythritol polyglycidyl ether, diglycerol polyglycidyl ether, glycerol polyglycidyl ether, resorcinol diglycidyl ether, neopentyl glycol diglycidyl ether, 1,6-hexanediol diglycidyl ether, ethylene glycol diglycidyl ether, diethylene glycol diglycidyl ether, polyethylene glycol diglycidyl ether, propylene glycol diglycidyl ether, polypropylene glycol diglycidyl ether, diglycidylaniline, N,N,N',N'-tetraglycidyl-m-xylenediamine, 1,3-bis(N,N'-diglycidylaminomethyl)cyclohexane, and bisphenol A-epichlorohydrin-type epoxy resins.

Examples of commercially available carbodiimide-based compounds include "CARBODILITE SV-02", "CARBODILITE V-02", "CARBODILITE V-02-L2", "CARBODILITE V-04", "CARBODILITE V-06", "CARBODILITE E-01", "CARBODILITE E-02", and "CARBODILITE E-04" manufactured by Nisshinbo Chemical Inc.

Examples of commercially available oxazoline-based compounds include "EPOCROS WS-300", "EPOCROS WS-500", "EPOCROS WS-700", "EPOCROS K-2010E", "EPOCROS K-2020E", and "EPOCROS K-2030E" manufactured by NIPPON SHOKUBAI CO., LTD.

Examples of the hydrazide-based compounds include oxalic acid dihydrazide, malonic acid dihydrazide, succinic acid dihydrazide, glutaric acid dihydrazide, adipic acid dihydrazide, sebacic acid dihydrazide, maleic acid dihydrazide, fumaric acid dihydrazide, and itaconic acid dihydrazide.

Examples of the isocyanate-based compounds include isocyanate compounds such as toluylene diisocyanate, 4,4'-diphenylmethane diisocyanate, hexamethylene diisocyanate, xylylene diisocyanate, m-xylylene diisocyanate, 1,5-naphthalene diisocyanate, hydrogenated diphenylmethane diisocyanate, hydrogenated toluylene diisocyanate, hydrogenated xylylene diisocyanate, isophorone diisocyanate, and tetramethylxylene diisocyanate; biuret polyisocyanate compounds such as "Sumidur N" (manufactured by Sumika Bayer Urethane Co., Ltd.); "Desmodur IL", "Desmodur HL" (all manufactured by Bayer A.G.); polyisocyanate compounds having an isocyanurate ring such as "CORONATE EH" (manufactured by Nippon Polyurethane Industry Co., Ltd.); adduct-type polyisocyanate compounds such as "Sumidur L" (manufactured by Sumika Bayer Urethane Co., Ltd.), "CORONATE HL" (manufactured by Nippon Polyurethane Industry Co., Ltd.), "TAKENATE WD-725", "TAKENATE WD-720", "TAKENATE WD-730", "TAKENATE WB-700" (all manufactured by Mitsui Chemicals Polyurethanes, Inc.); self-emulsifying-type aqueous-dispersion polyisocyanate compounds such as "AQUANATE 100", "AQUANATE 110", "AQUANATE 200", "AQUANATE 210" (all manufactured by Nippon Polyurethane Industry Co., Ltd.); and blocked isocyanates.

Examples of the aziridine-based compounds include "CHEMITITE PZ-33" and "CHEMITITE DZ-22E" manufactured by NIPPON SHOKUBAI CO., LTD.

Examples of the amine-based compounds include products manufactured by NIPPON SHOKUBAI CO., LTD. such as polyethyleneimines such as "EPOMIN SP-003", "EPOMIN SP-006", "EPOMIN SP-012", "EPOMIN SP-018", "EPOMIN SP-200", and "EPOMIN P-1000"; and aminoethylated acrylic polymers such as "POLYMENT SK-1000", "POLYMENT NK-100PM", and "POLYMENT NK-200PM" .

Examples of the metal chelate-based compounds include products manufactured by Matsumoto Trading Co., Ltd. such as titanium chelate-based such as "ORGATIX TC-400", "ORGATIX TC-300", "ORGATIX TC-310", and "ORGATIX TC-315"; zirconium acylate-based such as "ORGATIX ZB-126", aluminum chelate-based; and zinc chelate-based.

The crosslinking agent content of the acrylic resin is preferably in a range of 0.01 to 10 wt%.

In the case of using a combination of the thermosetting acrylic resin and the thermoplastic acrylic resin, the weight ratio of the thermosetting acrylic resin to the thermoplastic acrylic resin is preferably 95:5 to 30:70. More preferably, the weight ratio of the thermosetting acrylic resin to the thermoplastic acrylic resin is 90:10 to 35:65, particularly 80:20 to 40:60. When the thermoplastic acrylic resin is used so as to satisfy such a weight ratio, the primer function of the primer layer is maintained, but the primer layer tends to have a lowered coefficient of linear expansion. This results in reduction in the stress generated by expansion and shrinkage of the primer layer caused by temperature changes over time, so that the coating film becomes less likely to crack.

Regarding the acrylic resin, from the viewpoint that the stress due to flow of the polymer at high temperature is reduced so that the coating is less likely to crack, the lower limit of the weight-average molecular weight is preferably 5,000, more preferably 10,000, still more preferably 15,000. On the other hand, from the viewpoint that, for the primer layer, high fluidity is provided and good coatability tends to be exhibited, the upper limit of the weight-average molecular weight of the acrylic resin is preferably 800,000, more preferably 700,000, still more preferably 600,000.

As described above, the primer layer may contain an ultraviolet absorbent. When the primer layer contains an ultraviolet absorbent, photodegradation of the surface of the polyester layer tends to be suppressed, which results in improved weatherable adhesion between the polyester layer and the primer layer. Examples of the ultraviolet absorbent include ordinarily used various inorganic or organic ultraviolet absorbents. From the viewpoint of being held by the resin primer and not inhibiting adhesion between the polyester layer and the hard-coat layer, preferred are organic ultraviolet absorbents, particularly preferred is a fixed organic ultraviolet absorbent fixed by chemical bonds to the resin primer.

The fixed ultraviolet absorbent is less likely to undergo loss due to bleeding out or flowing out due to water. The fixing of the organic ultraviolet absorbent is achieved by, for example, a reaction of a radical reactive group with the primer resin monomer, or silanol bonds provided by alkoxysilyl groups, or bonds provided by reaction active groups of silane coupling agents, such as epoxy groups, amino groups, mercapto groups, or isocyanate groups. In particular, a primer layer formed of an alkoxy group-containing copolymer that is a copolymer of an ultraviolet absorptive vinyl-based monomer, an alkoxysilyl group-containing vinyl-based monomer, and another copolymerizable monomer, has high adhesion and high weatherability.

The primer layer preferably has a large thickness from the viewpoint of more effectively providing the functions of the primer layer such as ultraviolet absorption. On the other hand, the primer layer preferably has a small thickness from the viewpoint of suppressing cracking of the primer layer or separation between the primer layer and the polyester layer. Thus, in the case of forming the primer layer, the primer layer preferably has a thickness of 0.01 µm or more, more preferably 0.05 µm or more. On the other hand, the primer layer preferably has a thickness of 2.0 µm or less, more preferably 1.0 µm or less. Thus, the primer layer particularly preferably has a thickness of 0.01 to 2.0 µm. In particular, when the primer layer contains the ultraviolet absorbent, in order to achieve an ultraviolet absorbent content sufficient for blocking ultraviolet radiation, the primer layer preferably has a thickness of 0.1 µm or more.

As the process of forming the primer layer, as in the hard-coat layer, examples include processes using dipping, flow coating, spraying, a roll coater, or a flow coater, and a process of performing extrusion into a film and subsequently, in an in-line step, continuously applying a coating solution for the primer layer onto the substrate and curing the coating solution. In the in-line coating process, ordinary coating means such as a roll coater, a flow coater, a bar coater, a gravure, a slot die, or a comma coater can be used.

### [Decorative layer]

The multilayer body according to the present invention may include a decorative layer in order to impart decoration, for example. The multilayer body according to the present invention preferably includes a decorative layer from the viewpoint of easiness of imparting decoration.

In this case, the multilayer body according to the present invention preferably has a multilayer structure of decorative layer/polyester layer according to the present invention/hard-coat layer according to the present invention. The decorative layer is ordinarily constituted by the following design layer for imparting decoration, or the design layer and an ink layer for improving the decoration provided by the design layer.

The design layer is formed by printing various patterns using ink and a printer. Examples of the patterns include wood-grain patterns, stone-grain patterns that imitate surfaces of rocks such as marble patterns (for example, a travertine marble pattern), cloth patterns that imitate texture or cloth-like patterns, tile patterns, brick patterns, and, in addition, patterns of combinations of the foregoing patterns such as mosaic or patchwork patterns. These patterns can be formed by standard multicolored printing using process colors that are yellow, red, blue, and black. Alternatively, such a pattern can be formed by, for example, multicolored printing using spot colors in which individual color plates constituting the pattern are prepared.

The design ink used for the design layer is, for example, an ink prepared by appropriately mixing a binder with a colorant such as a pigment or a dye, a body pigment, a solvent, a stabilizing agent, a plasticizer, a catalyst, and a hardening agent, for example.

The binder is not particularly limited, and, for example, one or a mixture of two or more freely selected from the following is used: polyurethane-based resins, vinyl chloride/vinyl acetate-based copolymer resins, vinyl chloride/vinyl acetate/acrylic-based copolymer resins, chlorinated polypropylene-based resins, acrylic-based resins, polyester-based resins, polyamide-based resins, butyral-based resins, polystyrene-based resins, nitrocellulose-based resins, and cellulose acetate-based resins.

Examples of the colorant include inorganic pigments such as carbon black (India ink), iron black, titanium white, antimony white, chrome yellow, titanium yellow, iron oxide red, cadmium red, ultramarine blue, and cobalt blue, organic pigments such as quinacridone red, isoindolinone yellow, and phthalocyanine blue, dyes, metal pigments composed of flaky pieces of, for example, aluminum or brass, and pearly luster (pearly) pigments composed of flaky pieces of, for example, titanium dioxide coated mica or basic lead carbonate.

The ink forming the ink layer is preferably an ink including a non-crosslinking resin as a binder resin. Preferred examples of the ink include thermoplastic (non-crosslinking) urethane resins and polyvinyl acetal-based resins. As needed, in order to adjust the appearance of a low-glossiness region or the contrast due to glossiness difference between a low-glossiness region and its surrounding region, the ink may be prepared so as to contain, for example, an unsaturated polyester resin, an acrylic resin, or a vinyl chloride-vinyl acetate copolymer.

When the ink forming the ink layer contains a colorant, the ink itself can form a design pattern; however, such a color ink is not necessarily used. Of the pattern represented by the design layer, portions that are to be matted to represent apparent recess portions and the ink layer are formed so as to align with each other, to thereby provide a pattern having apparent recess portions due to the glossiness difference. For example, in the case of forming the design layer to represent a wood-grain pattern, ink portions of the ink layer are formed so as to align with the vessel portions of the wood grain, to thereby provide a pattern in which the vessel portions are recognized as apparent recess portions due to the glossiness difference. On the design layer, directly or on a highly transparent primer layer disposed thereon, the ink layer is formed by, for example, printing, to thereby facilitate alignment with the design layer, to achieve an excellent decorative representation.

The coating amount of the ink forming the ink layer is preferably large from the viewpoint of easiness of formation of a low-glossiness region. On the other hand, the coating amount of the ink is preferably small from the viewpoint of easiness of formation of glossiness difference in the surface of the decorative sheet, absence of limitations on apparatuses for printing with the ink, and cost effectiveness. Thus, the coating amount of the ink is preferably 0.1 g/m² or more, more preferably 0.5 g/m² or more. The coating amount of the ink is preferably 10 g/m² or less, more preferably 5 g/m² or less. Thus, particularly preferably, the coating amount of the ink is in a range of 0.1 to 10 g/m², most preferably in a range of 0.5 to 5 g/m².

The ink composition for forming the ink layer preferably contains a body pigment. The body pigment contained imparts thixotropy to the ink composition, so that, during printing of the ink layer using plates, the shape of the ink composition tends to be maintained. This enhances contrast (sharpness) between a recessed portion and a raised portion at an edge portion having transition from the raised portion to the recessed portion, to thereby achieve a sharp decorative representation.

The body pigment used in this case is not particularly limited, and is appropriately selected from, for example, silica, talc, clay, barium sulfate, barium carbonate, calcium sulfate, calcium carbonate, and magnesium carbonate.

Of these, preferred is silica, which is a material that provides a high degree of freedom of material designing such as oil absorbency, particle size, or pore volume, and is excellent in terms of decorativeness, whiteness, and coating stability as ink; particularly preferred is silica fine powder. The silica preferably has large particle sizes from the viewpoint that, in the case of addition to the ink, the ink is less likely to have excessively high thixotropy, and the ink has a low viscosity to facilitate control of printing. On the other hand, the silica preferably has small particle sizes from the viewpoint that the particle sizes are smaller than the coating thickness, so that the particles are less likely to undergo exposure of the top portions, are less likely to be noticeable, and are less likely to cause an odd appearance. Thus, the silica preferably has particle sizes in a range of 0.1 to 5 µm. In particular, in the case of matting the vessel pattern portions, since the vessel pattern portions are coated with the ink ordinarily at a coating thickness of 5 µm or less, the silica preferably has particle sizes satisfying the above-described range.

The body pigment content of the ink composition is preferably high from the viewpoint of imparting thixotropy to the ink composition. On the other hand, the body pigment content of the ink composition is preferably low from the viewpoint that the matting effect is less likely to degrade. Thus, specifically, the ink composition preferably has a body pigment content in a range of 5 to 15 wt%.

### [Insert-molding decorative film]

The multilayer body according to the present invention in which, as described above, the decorative layer is formed on one of the surfaces of the polyester layer according to the present invention, and the hard-coat layer according to the present invention is formed on the other surface, can be, in particular, suitably used as the following insert-molding decorative film.

Specifically, for example, in the fields of production of, for example, vehicle interior-exterior parts, insert molding is widely employed in which a decorative film is placed within an injection-molding mold, and molten resin is injected thereinto to combine together the resin and the decorative film. The decorative film used in such insert molding has a multilayer structure of a stack sequentially including a backer layer on the molten-resin injection side, an adhesive layer, a decorative layer, a polyester layer serving as a substrate, and a hard-coat layer serving as a surface layer. The multilayer body according to the present invention is useful as such an insert-molding decorative film.

In such an insert-molding decorative film, the adhesive forming the adhesive layer on a surface of the decorative layer preferably has high adhesiveness to the decorative layer and the backer layer. Such an adhesive may be one or a mixture of two or more selected from resins of polyurethane-based, polyester-based, polyethylene-based, polyamide-based, polyvinyl chloride-based, polychloroprenebased, carboxylated rubber-based, thermoplastic styrenebutadiene rubber-based, acrylic-based, styrene-based, cellulose-based, alkyd-based, polyvinyl acetate-based, ethylene-vinyl acetate copolymer-based, polyvinyl alcohol-based, epoxy-based, silicone-based, natural rubber, and synthetic rubber. Such an adhesive is selected such that it withstands the molding temperature of the decorative film.

Examples of commercially available adhesives include 467MP (trade name, manufactured by Sumitomo 3M Limited).

The adhesive layer for bonding together the decorative layer and the backer layer preferably has a large thickness from the viewpoint of facilitating exertion of adhesion strength. On the other hand, the adhesive layer preferably has a small thickness from the viewpoint of stretchability or moldability. Thus, the adhesive layer preferably has a thickness of 5 µm or more, more preferably 20 µm or more. On the other hand, the adhesive layer preferably has a thickness of 80 µm or less, more preferably 50 µm or less. Thus, particularly preferably, the adhesive layer has a thickness of 5 to 80 µm, more preferably 20 to 50 µm.

The backer layer ordinarily has a thickness of 100 to 500 µm. The backer layer is preferably formed of, for example, an ABS resin, a polyolefin resin, a styrene resin, an acrylic resin, a vinyl chloride resin, or a polycarbonate resin. The polyolefin resin is preferably a polypropylene resin.

Insert molding using such an insert-molding decorative film is performed in the following manner: ordinarily, this insert-molding decorative film is preliminarily molded so as to conform to a predetermined injection-molding mold; the molded decorative film is placed within the injection-molding mold; then the injection-molding mold is closed; a molten resin is injected into the injection-molding mold, and the resin solidified by cooling and the decorative sheet are combined together. Finally, after the molten resin is solidified by cooling, the injection-molding mold is opened, and the insert-molded article in which the surface of the molded article is covered with the decorative film is taken out from the injection-molding mold. Examples of the molten resin injected include acrylonitrile styrene resins, acrylonitrile butadiene styrene resins, polycarbonate resins, polystyrene resins, acrylic resins, and polyester resins.

### [Multilayer body according to the present invention]

The multilayer body according to the present invention may have any shape such as a film (sheet), a plate having a larger thickness, a block, or a mass. The multilayer body according to the present invention is not limited to a flat shape, and may have a curved shape or an amorphous shape such as a shape having irregularities.

The multilayer body according to the present invention is preferably a film from the viewpoint of utilization of the flexibility of the multilayer body according to the present invention. The thickness of the multilayer body according to the present invention is not particularly limited. The thickness of the multilayer body according to the present invention is the total thickness of the layers of the multilayer body according to the present invention.

As described above, the multilayer body according to the present invention has high surface hardness, is less likely to undergo deformation such as curling, and has high processibility, high handleability, and high flexibility.

In the multilayer body according to the present invention, the surface pencil hardness on the hard-coat-layer side is not particularly limited. The multilayer body according to the present invention preferably has high surface pencil hardness on the hard-coat-layer side from the viewpoint of scratch resistance. On the other hand, the multilayer body according to the present invention preferably has low surface pencil hardness on the hard-coat-layer side from the viewpoint of flexibility. Thus, the multilayer body according to the present invention preferably has, on the hard-coat-layer side, a surface pencil hardness of 2H or higher, still more preferably 4H or higher, particularly preferably 5H or higher. The multilayer body according to the present invention ordinarily has, on the hard-coat-layer side, a surface pencil hardness of 9H or lower. When the multilayer body according to the present invention includes hard-coat layers on a plurality of surfaces, on at least one of the hard-coat-layer surface sides, the surface pencil hardness is preferably as described above. The surface pencil hardness of the multilayer body according to the present invention can be measured by a method described later in EXAMPLES.

The multilayer body according to the present invention preferably has a high indentation modulus of elasticity on the hard-coat-layer side from the viewpoint of surface hardness. On the other hand, the multilayer body according to the present invention preferably has a low indentation modulus of elasticity on the hard-coat-layer side from the viewpoint of flexibility. Thus, the multilayer body according to the present invention preferably has, on the hard-coat-layer side, an indentation modulus of elasticity of 100 MPa or more, more preferably 500 MPa or more. On the other hand, the multilayer body according to the present invention preferably has, on the hard-coat-layer side, an indentation modulus of elasticity of 10000 MPa or less, more preferably 3000 MPa or less.

### [Film]

A film including the multilayer body according to the present invention has high surface hardness due to formation of the hard-coat layer according to the present invention, and has high curling resistance and high flexibility due to the structural unit derived from 2,5-furandicarboxylic acid and contained in the polyester layer according to the present invention serving as the substrate, and hence is useful as a flexible film, for example.

Hereinafter, an example of a production example of the film including the multilayer body according to the present invention will be described. However, the method for producing the film including the multilayer body according to the present invention is not limited at all to the following method.

First, the raw material for the polyester according to the present invention is used, and a molten sheet extruded through a die is solidified by cooling on a cooling roll to obtain an unstretched sheet. In this case, in order to achieve improved planarity of the sheet, increased adhesion is preferably provided between the sheet and the rotary cooling drum. Thus, an electrostatic adhesion process and/or a liquid coating adhesion process is preferably employed. Subsequently, the obtained unstretched sheet is ordinarily stretched in the biaxial directions. In this case, first, the unstretched sheet is stretched in one direction with a roll- or tenter-type stretching machine. The stretching temperature is ordinarily 80 to 140°C, preferably 85 to 120°C. The stretch ratio is ordinarily 2.5 to 7, preferably 3.0 to 6. Subsequently, stretching is performed in a direction orthogonal to the first-stage stretching direction at a temperature of ordinarily 70 to 170°C at a stretch ratio of ordinarily 3.0 to 7, preferably 3.5 to 6. Continuously at the temperature of 180 to 270°C, heat treatment is performed under tension or at a relaxation degree of 30% or less, to obtain a biaxially oriented film. In the above-described stretching, a process of performing two or more stages may be alternatively employed to achieve the stretching in one direction. In this case, the process is preferably performed such that the final stretch ratios in the two directions individually satisfy the above-described ranges.

In the production of the polyester film according to the present invention, a simultaneous biaxial stretching process may be alternatively employed. This process, the simultaneous biaxial stretching process is a process of stretching the unstretched sheet simultaneously in two directions under temperature control ordinarily at 70 to 120°C, preferably 80 to 110°C. In this case, the stretch ratio as an area ratio is 4 to 50, preferably 7 to 35, more preferably 10 to 25. Continuously at a temperature of 170 to 250°C, heat treatment is performed under tension or at a relaxation degree of 30% or less, to obtain a stretched-oriented film. For the simultaneous biaxial stretching apparatus employing the above-described stretching process, a publicly known stretching type can be employed such as a screw type, a pantograph type, or a linear motor type.

In the case of subjecting, during the stretching step of the polyester film, the surface of the film to primer treatment or hard-coat treatment, namely, the coating-stretching process (in-line coating), the sheet having been uniaxially stretched is coated with a primer layer- or hard-coat layer-forming coating solution. In the case of performing the coating-stretching process to form, on the polyester film, a primer or hard-coat layer, stretching and coating can be simultaneously achieved, and the coating layer can be formed with a thickness reduced in accordance with the stretch ratio, to thereby produce a film suitable as a hard-coat film.

### EXAMPLES

Hereinafter, the present invention will be described further in detail with reference to Examples; however, the present invention within the spirit and scope thereof is not limited to the following Examples.

Evaluation methods in Examples and Comparative Examples below are as follows.

### (1) Measurement of reduced viscosity (ηsp/c) of polyester

A solution in which 1 g of polyester accurately weighed was added to and dissolved in 100 ml of a solvent mixture of phenol/tetrachloroethane = 50/50 (weight ratio) was measured at 30°C.

### (2) Measurement of average particle size of silica particles

A transmission electron microscope (abbreviated as TEM) ("H-7650", manufactured by Hitachi High-Technologies Corporation, acceleration voltage: 100 kV) was used to observe the primer layer, and the average value of the particle sizes of 10 silica particles was determined as the average particle size.

### (3) Measurement of thickness of primer layer

In the polyester film including the primer layer, the surface of the primer layer was stained with RuO₄, and the film was embedded within an epoxy resin. Subsequently, cutting in the thickness direction was performed by ultrathin sectioning to provide a slice, and the slice was stained with RuO₄; and the section of the primer layer was measured with a TEM ("H-7650", manufactured by Hitachi High-Technologies Corporation, acceleration voltage: 100 kV).

### (4) Measurement of thickness of polyester layer

The multilayer body was embedded in an epoxy resin, and cut with a microtome in the thickness direction of the polyester layer. The section of the polyester layer was measured with a scanning electron microscope (abbreviated as SEM) ("S-4300N", manufactured by Hitachi High-Technologies Corporation, acceleration voltage: 15 kV), and the average value for 10 random points was determined as the thickness of the polyester layer.

### (5) Measurement of thickness of hard-coat layer

The multilayer body was embedded in an epoxy resin, and cut with a microtome in the thickness direction of the hard-coat layer. The section of the hard-coat layer was measured with a scanning electron microscope (abbreviated as SEM) ("S-4300N", manufactured by Hitachi High-Technologies Corporation, acceleration voltage: 15 kV), and the average value for 10 random points was determined as the thickness of the hard-coat layer.

### (6) Measurement of surface pencil hardness

TriboGear HEIDON-14DR (manufactured by Shinto Scientific Co., Ltd.) was used to measure, in accordance with JIS K5600-5-4 (1999), the surface pencil hardness of the hard-coat layer of the obtained multilayer body.

The surface pencil hardness of the polyester layer was measured, on a side opposite to a primer layer, in the polyester film obtained in Reference Example described later.

The surface pencil hardness of the hard-coat layer was measured, on a hard-coat side, in a hard-coat layer having a thickness of 30 µm and formed on a polyethylene terephthalate film having a thickness of 188 µm.

### (7) Measurement of curling amount

The multilayer body was cut into dimensions of 50 mm long × 50 mm wide. The cut multilayer body was placed on a flat surface; for the four corners of the multilayer body that were apart above from the flat surface, the heights (from the flat surface) of the four corners were individually measured and the total thereof was determined as curling amount.

### (8) Measurement of indentation modulus of elasticity of hard-coat layer

An ultra micro hardness tester "DUH-211" (manufactured by SHIMADZU CORPORATION) was used to measure the indentation modulus of elasticity of the hard-coat layer under conditions below. The indentation modulus of elasticity of the hard-coat layer was the indentation modulus of elasticity measured, on a hard-coat-layer side, in a hard-coat layer having a thickness of 13 µm and disposed on a polyester film.
Test mode: load-unload test
Test force: 1 mN
Minimum test force: 0.002 mN
Loading rate: 0.0060 mN/sec
Load hold time: 2 sec
Unload hold time: 0 sec
Depth full scale: 1 µm
Indenter elastic modulus: 1.140 × 10⁶ N/mm²
Poisson's ratio for indenter: 0.07
Type of indenter: Triangular 115
Number of measurements of length: 3

### (9) Measurement of flexural modulus of elasticity of polyester

A micro compounder (manufactured by Xplore Instruments BV, Xplore series MC15) was used; Polyester (A) was fed through the hopper, and kneaded at a number of revolutions of 100 rpm, at 240°C, in a nitrogen atmosphere, for 3 minutes. Subsequently, the molten resin was transferred through the purge port to an injection-molding cylinder set at 240°C, molded under a condition of a mold temperature of 30°C, to obtain a test piece having a length of 80 mm, a width of 10 mm, and a thickness of 4 mm. The obtained test piece was measured in accordance with ISO178, at 23°C, in terms of flexural modulus of elasticity.

Polyester (B), which has a higher melting point than Polyester (A), was measured in terms of flexural modulus of elasticity as in Polyester (A) except that the kneading temperature and the temperature of the injection-molding cylinder were set at 280°C.

### (10) Measurement of adhesion

The hard-coat layer of the multilayer body was subjected to 10 × 10 cross-cutting; a tape having a width of 24 mm ("CELLOTAPE" (registered trademark) CT-24, manufactured by Nichiban Co., Ltd.) was affixed and rapidly peeled at a peeling angle of 180°. The surface from which peeling was performed was observed; cases of having a flaking area of 5% or less were evaluated as Excellent, cases of having a flaking area of more than 5% and 20% or less were evaluated as Good, and cases of having a flaking area of more than 20% were evaluated as Poor.

### (11) Measurement of flexibility

On the basis of flexibility (cylindrical mandrel method) according to JIS-K5600-5-1 (1999), the multilayer body was bent and wound around an iron rod having a diameter of 10 mm such that the hard-coat layer was positioned outside; in the hard-coat layer of the wound portion, cases of having no cracks were evaluated as Excellent, cases of having some cracks were evaluated as Good, and cases of having a large number of cracks were evaluated as Poor.

### [Example 1]

### <Production of Polyester (A)>

To a reaction vessel equipped with a stirrer, a nitrogen inlet, a heater, a thermometer, and a vacuum port, as polyester raw materials, 85.7 parts by weight of 2,5-furandicarboxylic acid and 68.2 parts by weight of 1,2-ethanediol were charged, and the reaction vessel was purged to have a nitrogen atmosphere.

Subsequently, the reaction vessel was placed into an oil bath, heated to 210°C under stirring, and caused to react at 210°C for 1 hour; and the distillate was collected. At the time when the reaction solution became transparent, 0.71 parts by weight of a 1,2-ethanediol solution containing 5 wt% tetrabutyl titanate dissolved in advance was added.

Subsequently, while the solution was heated to 260°C over 1 hour and 30 minutes, the pressure was gradually reduced to about 130 Pa. After three hours lapsed from the start of the reduction in the pressure, the stirring was stopped, the pressure was returned to the previous pressure, and the polycondensation reaction was completed, to obtain Polyester (A). The obtained Polyester (A) was found to have a reduced viscosity of 0.68 dL/g. The obtained Polyester (A) was found to have a flexural modulus of elasticity of 3500 MPa.

### <Production of Primer solution (A)>

The following acrylic resin, oxazoline compound, and silica particles in respective amounts of 87 parts by weight (as the solid content of the acrylic resin), 10 parts by weight, and 3 parts by weight were mixed together, to produce Primer solution (A).

### • Acrylic resin

Aqueous dispersion of acrylic resin composed of methyl methacrylate:ethyl acrylate:acrylonitrile:N-methylolacrylamide:acrylic acid = 40:22:21:10:3:4 (mol%) (emulsifying agent: anionic surfactant)

### • Oxazoline compound

Acrylic polymer having oxazoline group and polyalkylene oxide chain; amount of oxazoline group = 4.5 mmol/g

### • Silica particles

Colloidal silica having average particle size of 70 nm

### <Production of Hard-coat solution (A)>

The following polyfunctional acrylate, photopolymerization initiator, and solvent were mixed together in the following ratio to produce Hard-coat solution (A).

### • Polyfunctional acrylate

NK ester A-DPH (manufactured by Shin Nakamura Chemical Co., Ltd.): 100 parts by weight

### • Photopolymerization initiator

IRgacure 184 (manufactured by BASF): 5 parts by weight

### • Solvent

Toluene: 100 parts by weight
Hard-coat solution (A) was applied to a polyethylene terephthalate film having a thickness of 188 µm and cured to form a hard-coat layer having a thickness of 30 µm. The surface pencil hardness measured on the hard-coat-layer side was found to be 2H.

### <Production of multilayer body>

Polyester (A) was fed as the raw material to an extruder, heated to melt at 280°C, subsequently extruded onto a cooling roll set at 45°C, and cooled to solidify, to obtain an unstretched sheet. Subsequently, the peripheral speed difference between rolls was used to stretch, at a film temperature of 100°C, the film in the longitudinal direction at a stretch ratio of 5.0; subsequently, one of the surfaces of this longitudinally stretched film was coated with Primer solution (A); the film was guided to a tenter, stretched in the cross direction at 120°C at a stretch ratio of 4.5, heat-treated at 200°C for 10 seconds, and then relaxed in the cross direction by 3%, to obtain a polyester film including a primer layer and having a thickness of 23 µm. The primer layer was found to have a (dry) thickness of 0.1 µm.

The obtained polyester film was coated with Hard-coat solution (A), dried with a hot-air dryer at 80°C for 5 minutes; subsequently, an UV irradiator (Fusion Light Hammer 6, manufactured by Fusion UV Systems Inc.) was used to cure the coating layer of Hard-coat solution (A), to obtain a multilayer body including a hard-coat layer. The hard-coat layer was found to have a thickness of 1.5 µm. UV irradiation conditions were a speed of 4.0 m/min, an irradiation amount of 50%, and a light source of an electrodeless lamp. The multilayer body was found to have a thickness of 24.5 µm. The obtained multilayer body was found to have Good adhesion.

### [Example 2]

A multilayer body including a hard-coat layer was obtained as in Example 1 except that the hard-coat layer was formed so as to have a thickness of 3.0 µm. The multilayer body was found to have a thickness of 26 µm. The obtained multilayer body was found to have Good adhesion.

### [Example 3]

A multilayer body including a hard-coat layer was obtained as in Example 1 except that the hard-coat layer was formed so as to have a thickness of 13 µm. The multilayer body was found to have a thickness of 36 µm. The multilayer body was found to have Good adhesion. The indentation modulus of elasticity measured on the hard-coat side was found to be 5800 MPa.

### [Example 4]

A multilayer body including a hard-coat layer was obtained as in Example 1 except that, as the hard-coat agent, a polyfunctional urethane acrylate, HX-RPH (Kyoeisha Chemical Co., Ltd., as the hard-coat layer, the surface pencil hardness is 9H) was used to form a hard-coat layer having a thickness of 13 µm. The multilayer body was found to have a thickness of 36 µm. The multilayer body was found to have Excellent adhesion. The indentation modulus of elasticity measured on the hard-coat side was found to be 1200 MPa.

The evaluation results of the multilayer bodies obtained in Example 1 to Example 4 are described in Table 1 below.

The multilayer bodies obtained in Example 1 to Example 4 all had high surface pencil hardness and were multilayer bodies having high abrasion resistance, high scratch resistance, small curling amount, and high curling resistance. Furthermore, Examples 3 and 4 had high flexibility.

### [Comparative Example 1]

### <Production of Polyester (B)>

In a reaction vessel equipped with a stirrer, a nitrogen inlet, a heater, a thermometer, and a vacuum port, as polyester raw materials, 100 parts by weight of dimethyl terephthalate and 60 parts by weight of 1,2-ethanediol were used; ethyl acid phosphate was added in an amount of 30 ppm relative to the polyester to be generated; as a catalyst, magnesium acetate tetrahydrate was added in an amount of 100 ppm relative to the polyester to be generated; and an esterification reaction was caused in a nitrogen atmosphere at 260°C. Subsequently, tetrabutyl titanate was added in an amount of 50 ppm relative to the polyester to be generated; while the solution was heated to 280°C over 2 hours and 30 minutes, the pressure was reduced to an absolute pressure of 0.3 kPa, and melt-polycondensation was further performed for 80 minutes to obtain Polyester (B) having a reduced viscosity of 0.63 dL/g. The obtained Polyester (B) was found to have a flexural modulus of elasticity of 2200 MPa.

### <Production of multilayer body>

Polyester (B) was fed as the raw material to an extruder, heated to melt at 280°C, subsequently extruded onto a cooling roll set at 25°C, and cooled to solidify, to obtain an unstretched sheet. Subsequently, the peripheral speed difference between rolls was used to stretch, at a film temperature of 85°C, the film in the longitudinal direction at a stretch ratio of 3.2; subsequently, one of the surfaces of this longitudinally stretched film was coated with Primer solution (A); the film was guided to a tenter, stretched in the cross direction at 110°C at a stretch ratio of 4.0, heat-treated at 220°C for 10 seconds, and then relaxed in the cross direction by 3%, to obtain a polyester film having a thickness of 23 µm and including a primer layer having a (dry) thickness of 0.1 µm.

The obtained polyester film was found to have a surface pencil hardness of B. The multilayer body of Comparative Example 1 had a lower surface pencil hardness than the multilayer bodies of Examples 1 to 4. Thus, the multilayer body of Comparative Example 1 had lower abrasion resistance and scratch resistance than the multilayer bodies of Examples 1 to 4.

On the obtained polyester film, a hard-coat layer was formed as in Example 1, to obtain a multilayer body. The multilayer body was found to have a thickness of 24.5 µm. Evaluation results of the obtained multilayer body are described in Table 1.

This multilayer body had a surface pencil hardness lower than the surface pencil hardnesses of the multilayer bodies of Examples 1 and 2, and hence had low abrasion resistance and low scratch resistance.

### [Comparative Example 2]

A multilayer body was obtained as in Comparative Example 1 except that the hard-coat layer was formed so as to have a thickness of 7.5 µm. The multilayer body was found to have a thickness of 30.5 µm. Evaluation results of the obtained multilayer body are described in Table 1.

Since the hard-coat layer had such a large thickness, the surface pencil hardness of the multilayer body was higher than that of Comparative Example 1, but was lower than the surface pencil hardnesses of the multilayer bodies of Examples 1 to 4. Thus, the abrasion resistance and the scratch resistance were insufficient. On the other hand, the curling amount was large and the curling resistance was low.

### [Reference Example]

Polyester (A) was fed as the raw material to an extruder, heated to melt at 280°C, subsequently extruded onto a cooling roll set at 45°C, and cooled to solidify, to obtain an unstretched sheet. Subsequently, the peripheral speed difference between rolls was used to stretch, at a film temperature of 100°C, the film in the longitudinal direction at a stretch ratio of 5.0; subsequently, one of the surfaces of this longitudinally stretched film was coated with Primer solution (A); the film was guided to a tenter, stretched in the cross direction at 120°C at a stretch ratio of 4.5, heat-treated at 200°C for 10 seconds, and then relaxed in the cross direction by 3%, to obtain a polyester film including a primer layer and having a thickness of 23 µm. The primer layer was found to have a (dry) thickness of 0.1 µm. The obtained polyester film was found to have a surface pencil hardness of H on a side opposite to the primer layer.

**[Table 1]**

| | Polyester layer | | | | | Hard-coat layer | | | | Multilayer body | | | | |
|---|---|---|---|---|---|---|---|---|---|---|---|---|---|---|
| | Dicarboxylic acid unit | Thickness (µm) | Surface pencil hardness | Flexural modulus of elasticity (MPa) | Reduced viscosity (dL/g) | Type | Thickness (µm) | Surface pencil hardness | Indentation modulus of elasticity (MPa) | Thickness (µm) | Surface pencil hardness | Curling amount (mm) | Flexibility | Adhesion |
| Example 1 | 2,5-Furandicarboxylic acid | 23 | H | 3500 | 0.68 | Acrylic resin | 1.5 | 2H | 5800 | 24.5 | 3H | 0 | - | Good |
| Example 2 | | | | | | | 3.0 | | | 26 | 3H | 0 | - | Good |
| Example 3 | | | | | | | 13 | | | 36 | 3H | - | Good | Good |
| Example 4 | | | | | | Urethane acrylic resin | 13 | 9H | 1200 | 36 | 7H | - | Excellent | Excellent |
| Reference Example | | | | | | - | 0 | - | - | 23 | H | - | - | - |
| Comparative Example 1 | Terephthalic acid | | B | 2200 | 0.63 | Acrylic resin | 1.5 | 2H | 5800 | 24.5 | B | 0 | - | - |
| Comparative Example 2 | | | B | | | | 7.5 | | | 30.5 | H | 6.7 | - | - |

### [Production of multilayer body including decorative layer]

The polyester film obtained in Example 1, on a side opposite to the hard-coat layer, can be coated with a printing ink including an acrylic-based resin and a vinyl chloride-vinyl acetate-based copolymer resin as binder resins (acrylic resin: 50 wt%, vinyl chloride-vinyl acetate-based copolymer resin: 50 wt%) with a coating amount of 3 g/m² by gravure printing, to form a decorative layer having a wood-grain pattern. Furthermore, an adhesive (manufactured by Sumitomo 3M Limited: 467MP) and an ABS backer (manufactured by RP TOPLA LIMITED, thickness: 300 µm) can be laminated together using a laminator to form an adhesive layer having a thickness of 50 µm; while the separator is removed, the adhesive layer and the decorative-layer side of the polyester film having the decorative layer can be laminated together using a laminator, to form a decorative film (backer layer/adhesive layer/decorative layer/polyester film).

Furthermore, on the polyester-film side of the obtained decorative film, a hard-coat layer having a thickness of 1.5 µm can be formed by the same method as in Example 1.

The resultant decorative film having the hard-coat layer is less likely to be scratched because the surface having the hard-coat layer has high pencil hardness, and can be suitably used as a decorative film having high flexibility because the hard-coat layer has a small thickness.

As is understood from the above-described results, the present invention provides a multilayer body that has, even with a reduced-thickness hard-coat layer, high surface hardness, to thereby provide high curling resistance and high handleability. Such a thin hard-coat layer provides high flexibility and high processibility.

The present invention has been described so far in detail with reference to the specific embodiments; however, various changes can be made without departing from the spirit and scope of the present invention, which is apparent to those skilled in the art.

This application is based on Japanese Patent Application No. 2018-146976, filed August 3, 2018, and the content of which is incorporated by reference herein in its entirety.

### Industrial Applicability

The multilayer body according to the present invention has high surface hardness, high curling resistance, and high flexibility, and is suitably applicable to, for example, substrates of films for decorative molding such as insert-molding sheets or in-mold transfer sheets, ITO substrate films, and display cover sheets.

## Claims

1. A multilayer body comprising a polyester layer and a hard-coat layer, wherein a polyester contained in the polyester layer includes a structural unit derived from a diol and a structural unit derived from a dicarboxylic acid, and, of the structural unit derived from a dicarboxylic acid, a main structural unit is a structural unit derived from 2,5-furandicarboxylic acid.

2. The multilayer body according to Claim 1, wherein, of the structural unit derived from a diol, a main structural unit is a structural unit derived from 1,2-ethanediol.

3. The multilayer body according to Claim 1 or 2, wherein the multilayer body has, on a hard-coat-layer side, a surface pencil hardness of 2H or higher.

4. The multilayer body according to any one of Claims 1 to 3, wherein the hard-coat layer has a thickness of 30 µm or less.

5. The multilayer body according to any one of Claims 1 to 4, wherein the hard-coat layer has a surface pencil hardness equal to or higher than a surface pencil hardness of the polyester layer.

6. The multilayer body according to any one of Claims 1 to 5, wherein the hard-coat layer has an indentation modulus of elasticity of 10 to 10000 MPa.

7. The multilayer body according to any one of Claims 1 to 6, wherein the polyester contained in the polyester layer has a flexural modulus of elasticity of 2500 to 4000 MPa.

8. The multilayer body according to any one of Claims 1 to 7, wherein the polyester contained in the polyester layer has a reduced viscosity of 0.5 to 4 dL/g.

9. The multilayer body according to any one of Claims 1 to 8, wherein the hard-coat layer contains an acrylic resin.

10. The multilayer body according to any one of Claims 1 to 9, further comprising a decorative layer.

11. A film comprising the multilayer body according to any one of Claims 1 to 10.
